# EUROPEAN PATENT SPECIFICATION

(11) **EP 4 124 837 B1**
(45) Date of publication and mention of the grant of the patent: **05.06.2024**
(21) Application number: 22185580.2
(22) Date of filing: 18.07.2022
(51) Int. Cl.: G01F 11/02

(54) **DOSING DEVICE FOR DOSING A FLUID INTO A RECEPTACLE**
DOSIERVORRICHTUNG ZUM DOSIEREN EINES FLUIDS IN EINEN BEHÄLTER
DISPOSITIF DE DOSAGE DESTINÉ AU DOSAGE D'UN FLUIDE DANS UN RÉCIPIENT

(30) Priority: 29.07.2021 IT 202100020366
(43) Date of publication of application: 01.02.2023
(73) Proprietor: Gea Procomac S.p.A., 43038 Sala Baganza (PR) (IT)
(72) Inventor: ABELLI, Paolo, 43123 Parma (IT); ARBELTI, Luca, 43126 Parma (IT)
(74) Representative: Dondi, Silvia

(56) References cited:
- EP-A1- 0 210 687
- US-A- 4 229 413
- US-A- 5 339 999
- US-B2- 10 926 897

## Description

The present invention relates to a dosing device for dosing a fluid into a receptacle.

Volumetric dosing of fluids by piston devices has been known for decades. For example, document US 3,570,524 of 1967 already showed a dosing apparatus comprising a cylinder with a sliding piston.

Beyond the embodiments known so far today, the basic principle of dosing with a piston is as follows.

The piston is movable linearly inside the cylinder owing to a mechanical or electric actuator. The sliding of the piston in the cylinder expands or reduces a dosing chamber in which the fluid product is accumulated. This dosing chamber communicates on one side with a tank containing the product and on the other hand with a conduit that leads to a shut-off valve, often indicated by the technical term of "cut-drip valve". The cut-drip valve extends substantially parallel to the dosing cylinder with piston.

During preparation of the dose, the cut-drip valve is closed whereas the piston is raised inside the cylinder so as to create a partial space in the dosing chamber and in the conduit that connects to the cut-drip valve. By so doing, the desired product dose is sucked into the dosing chamber (which expands).

In this context, the term "dose" indicates a preset volume of product.

After the dose has been prepared, the cut-drip valve is opened and the piston is lowered, which performs a mechanical thrust action on the dose present in the dosing chamber and in the conduit that connects to the cut-drip valve. The dose of product then flows into the receptacle placed below the cut-drip valve.

At the end of dispensing, the cut-drip valve is closed.

One example of a volumetric doser is found in document EP 3274260 in which the dosing cylinder is parallel to the product-dispensing conduit and is connected thereto by an intermediate portion.

The main limits of the known solutions are:
- poor dosing precision, i.e. the volume of product dispensed is not repeatable constantly;
- complex and bulky structure;
- difficulty in sanitizing and/or sterilizing the conduits.

Document US 10,926,897 B2 discloses a dosing device having a dosing cylinder which is distinct from the valve body with the nozzle for dispensing the fluid. The dosing cylinder is connected to the valve body by means of an inclined channel.

Document US 5,339,999 A discloses a metering unit for filling cups with a paste-form product according to the preamble of claim 1.

In this context, the technical task underpinning the present invention is to propose a device for dosing a fluid into a receptacle which obviates the drawbacks of the prior art as cited above.

In particular, an object of the present invention is to propose a dosing device for dosing a fluid into a receptacle that is structurally simpler and more compact than known solutions.

Another object of the present invention is to propose a dosing apparatus that is easier to sterilize than the solutions of the prior art.

Another object of the present invention is to propose a dosing device for dosing a fluid into a receptacle that increases dosing accuracy with respect to known solutions.

The stated technical task and specified aims are substantially achieved by a dosing device for dosing a fluid into a receptacle, comprising:
- a valve body with an extension along a first prevalent direction, the valve body having a dispensing nozzle for dispensing the fluid;
- a shutter slidably inserted inside a passage obtained in the valve body;
- a dosing cylinder having an extension along a second prevalent direction;
- a piston slidably inserted into the dosing cylinder so as to define a variable volume dosing chamber.

Originally, the second prevalent direction is inclined relative to the first prevalent direction so that the dosing cylinder is inclined relative to the valve body.

In particular, the dosing cylinder is inclined relative to the valve body by an angle comprised between 20° and 90°.

In particular, a first end of the dosing cylinder leads into the valve body.

According to one aspect of the invention, the first end of the dosing cylinder leads into the valve body above the filling nozzle.

According to one aspect of the invention, the dosing device further comprises a first annular sleeve mounted outside the valve body.

The shutter and the first annular sleeve are coupled magnetically or electromagnetically.

According to one embodiment, the shutter comprises a first core made of ferromagnetic material. The first annular sleeve comprises a plurality of first magnetic rings alternating with a plurality of first ferromagnetic rings.

According to one aspect of the invention, the dosing device further comprises a first pneumatic cylinder or a first electric motor that is operably active on the first annular sleeve to make the first annular sleeve slide on the valve body.

According to another embodiment, the first annular sleeve is a fixed stator housing electric windings and the shutter houses permanent magnets.

According to one aspect of the invention, the dosing device further comprises a second annular sleeve mounted outside the dosing cylinder. The piston and the second annular sleeve are coupled magnetically or electromagnetically.

According to one aspect of the invention, the dosing device further comprises a second pneumatic cylinder or a second electric motor that is operably active on the second annular sleeve to make the second annular sleeve slide on the valve body.

According to one embodiment, the second annular sleeve is a fixed stator housing electric windings and the piston houses permanent magnets.

Additional features and advantages of the present invention will become more apparent from the illustrative and thus non-limiting description of a preferred but not exclusive embodiment of a device for dosing a fluid into a receptacle, as illustrated in the appended drawings, in which:
- figure 1 illustrates a dosing device for dosing a fluid into a receptacle, according to the present invention, in a sectioned view;
- figures 2a to 2d illustrate different positions of the shutter and of the piston of the dosing device of figure 1, in as many operating steps;

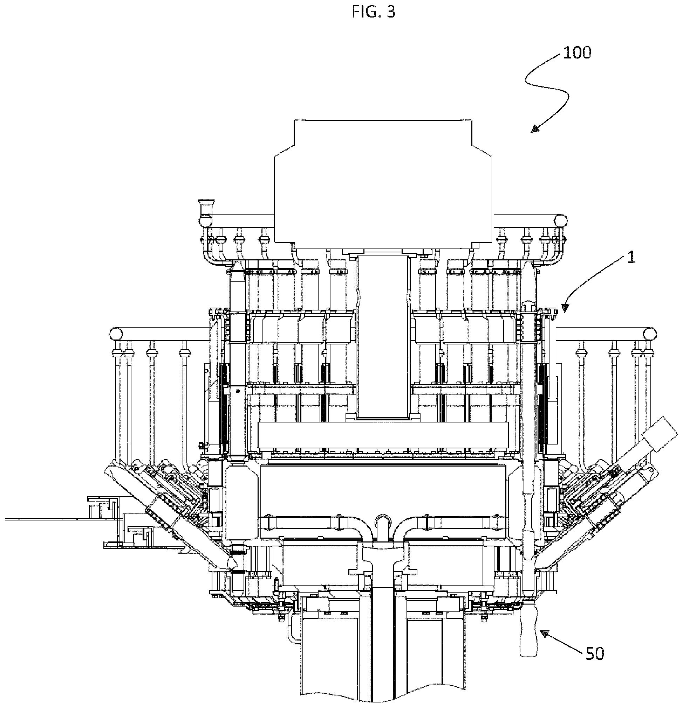

- figure 3 illustrates a sectioned view of a dosing machine according to the present invention.

With reference to the figures, number 1 indicates a dosing device for dosing a fluid into a receptacle 50.

For example, the fluid is a food product (e.g. beverage).

In some applications, the fluid may contain solid pieces. For example, the fluid is a yoghurt or jam with pieces of fruit, or consists of legumes or nuts or vegetables immersed in a protective liquid (for example water and thickeners).

The dosing cylinder 1 comprises a valve body 2 having an extension along a first prevalent direction D1.

Inside the valve body 2, a passage 3 for the fluid is obtained.

This passage 3 is obtained between an inlet 4 for the fluid and a fluid-dispensing nozzle 5 for dispensing the fluid to the receptacle 50.

The inlet 4 is in fluid communication with a product supply line.

A sanitizing fluid can always be supplied through the inlet 4 during a step of sanitizing the dosing device 1.

Valve means configured to establish a selective communication between the inlet 4 and the dispensing nozzle 5 is operatively active within the passage 3. In the embodiment described and illustrated here, the valve means comprises at least one shutter 6.

The shutter 6 is slidably inserted inside the passage 3.

In particular, the shutter 6 is traversed by a through channel so as to place an upper chamber 9 obtained in the passage 3 in fluid communication with a lower chamber 19 obtained in the passage 3.

The upper chamber 9 is connectable selectively with the return path of the sanitizing fluid.

The dosing cylinder 1 further comprises a dosing cylinder 10 having an extension along a second prevalent direction D2.

Inside the dosing cylinder 10, a piston 11 is slidably inserted that defines a variable volume dosing chamber 12.

In particular, the dosing chamber 12 is delimited by an end of the piston 11 and by the inner walls of the dosing cylinder 10.

The second prevalent direction D2 is inclined relative to the first prevalent direction D1 so that the dosing cylinder 10 is inclined relative to the valve body 2.

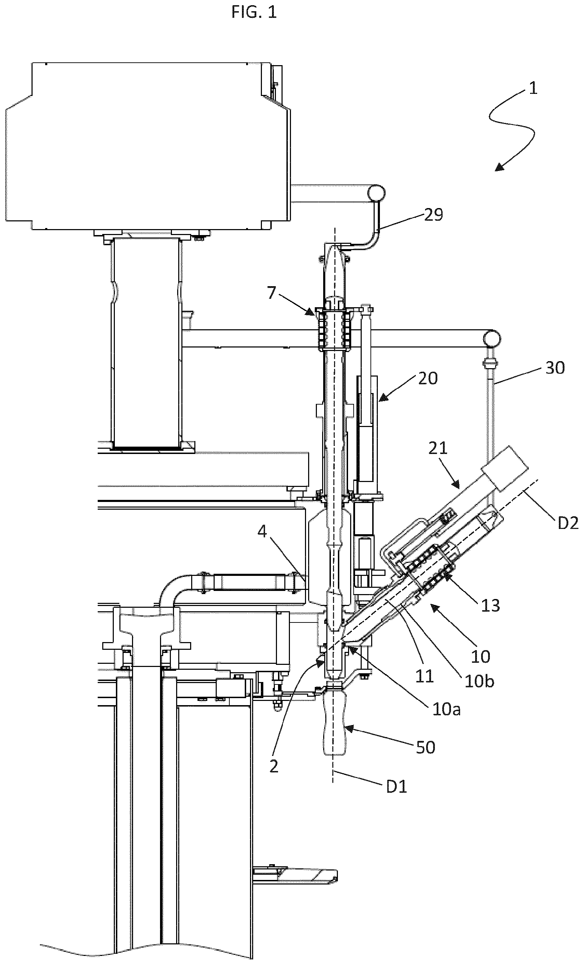

As can be seen in figure 1, the dosing cylinder 10 has a first end 10a that leads into the valve body 2.

In particular, the dosing cylinder 10 is connected directly to the valve body 2. In this context, the term "directly" indicates that no intermediate conduits are present between the dosing cylinder 10 and the valve body 2.

In particular, the dosing cylinder 10 is fitted directly into the valve body 2.

In particular, the first end 10a of the dosing cylinder 10 leads into the valve body 2 above the filling nozzle 5.

The dosing cylinder 10 is inclined relative to the valve body 2 by an angle α comprised between 20° and 90°.

This angle α is formed by the intersection between the first prevalent direction D1 and the second prevalent direction D2.

Preferably, the angle α is substantially 45°. This inclination corresponds to a good compromise between reduced overall dimensions and correct operation.

According to one embodiment of the invention, the dosing device 1 further comprises a first annular sleeve 7 mounted outside the valve body 2.

The shutter 6 (or in general the valve means within the passage 3) and the first annular sleeve 7 are coupled magnetically or electromagnetically.

For example, the shutter 6 comprises a first core made of ferromagnetic material.

Preferably, the first core has a central portion having a cylindrical extension along the first prevalent direction D1 and a plurality of radial projections having an extension substantially orthogonal to the first prevalent direction D1.

In particular, the radial projections are distributed along the longitudinal extension of the central portion, i.e. are distributed along the length of the central portion.

Preferably, the radial projections are equally spaced.

In this context, it should be understood that the radial projections are equally spaced both angularly, relative to an axis of symmetry of the central portion (which can coincide with the previously introduced first prevalent direction D1), and longitudinally, i.e. in the extension thereof along the length of the central portion.

For example, each radial projection consists of a fin or tooth extending radially from the central portion.

In one embodiment, the fins or teeth that extend at the same height (or elevation) as the shutter 6 define a flower structure or alternatively a cross-shaped structure.

According to one embodiment, each of the radial projections has a tapered extension leading away from the central portion. In particular, the thickness of each radial projection is greater near the central portion and decreases moving away from the central portion.

According to one embodiment, the first annular sleeve 7 is mounted slidably outside the valve body 2.

The first annular sleeve 7 is in this case coupled magnetically with the shutter 6, as will be explained below.

The first annular sleeve 7 comprises a plurality of first magnetic rings (i.e. formed by permanent magnets) alternating with a plurality of first ferromagnetic rings.

In particular, the first magnetic rings and the first ferromagnetic rings are packed into a box-shaped container made of non-ferromagnetic material.

According to one aspect of the invention, each of the first ferromagnetic rings faces a group of radial projections located at the same height (or elevation) as the shutter 6.

According to one embodiment, the thickness of the radial projections is substantially identical to the thickness of the first ferromagnetic rings.

Each of the first magnetic rings faces the spaces or gaps.

According to one embodiment, the thickness of the spaces or gaps is substantially identical to the thickness of the first magnetic rings.

The alignment of each of the first ferromagnetic rings with a group of radial projections enables the passage of the lines of force of the magnetic field to be maximized.

The structure of the shutter 6 and of the annular sleeve 7 described above is similar to that described in the PCT patent application filed as WO 2020/128677 in the name of the Applicant.

A first wall of the valve body 2 made of non-ferromagnetic material is interposed between the first annular sleeve 7 and the shutter 6.

According to one embodiment, the first annular sleeve 7 is slid on the valve body 2 by a first pneumatic cylinder or by a first electric motor 20.

According to another embodiment, the coupling between the shutter 6 and the first annular sleeve 7 is of electromagnetic type.

In particular, the first annular sleeve 7 is a fixed stator housing electric windings.

The shutter 6 can have the structure described above or can house permanent magnets.

The passage of the current in the electric windings of the first annular sleeve 7 generates an electromagnetic field that causes sliding of the shutter 6 (which is in fact the rotor of the system) inside the passage 3.

According to one embodiment of the invention, the dosing device 1 further comprises a second annular sleeve 13 mounted outside the dosing cylinder 10.

The piston 11 and the second annular sleeve 13 are coupled magnetically or electromagnetically.

According to one embodiment, the second annular sleeve 13 is mounted slidably outside the dosing cylinder 10.

For example, the second annular sleeve 13 is slid on the doser cylinder 10 by a second pneumatic cylinder or by a second electric motor 21.

The second annular sleeve 13 is in this case coupled magnetically with the piston 11.

According to another embodiment, the coupling between the piston 11 and the second annular sleeve 13 is of electromagnetic type.

In particular, the second annular sleeve 13 is a fixed stator housing electric windings. The piston 11 on the other hand houses permanent magnets.

The passage of the current in the electric windings of the second annular sleeve 13 generates an electromagnetic field that causes sliding of the piston 11 (which is in fact a rotor) inside the dosing cylinder 10.

The operation of the dosing device for dosing a fluid into a receptacle according to the present invention is described below.

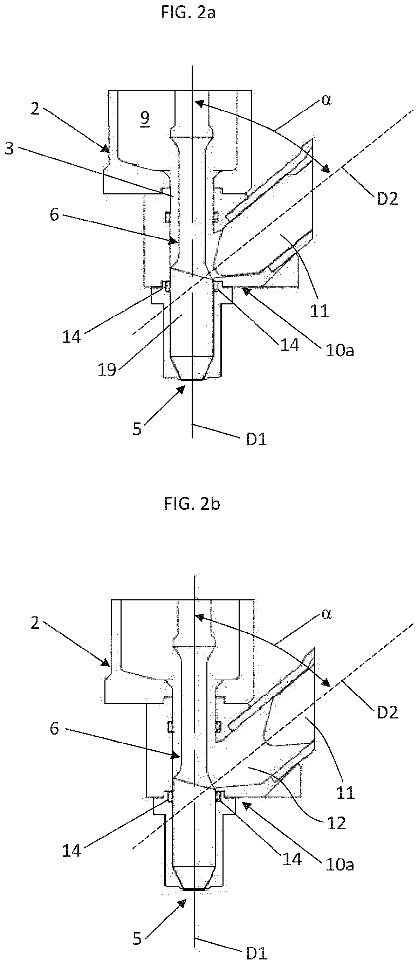

Consider figure 2a, which refers to the step of loading a dose of fluid into the dosing chamber 12.

In this figure, the shutter 6 is in a lower limit position, so the (widened) bottom thereof abuts on a first sealing gasket 14.

The fluid passes through the channel 8 inside the shutter 6 and flows to the cylinder 10. In fact, the abutment on the first sealing gasket 14 prevents the fluid from dropping by gravity onto the dispensing nozzle 5.

In the meantime, the piston 11 slides inside the dosing cylinder 10 away from the valve body 2, i.e. rises upwards. In this manner, the dosing chamber 12 expands to receive the fluid coming from the channel 8 inside the shutter 6 and thus prepare a dose of fluid.

In fact, the piston 11 rises, defining a linear stroke that corresponds to the volume to be dispensed (the dose in fact).

In figure 2b the shutter 6 starts the upward stroke until it is in an upper limit position, so that it shuts off access to the tank.

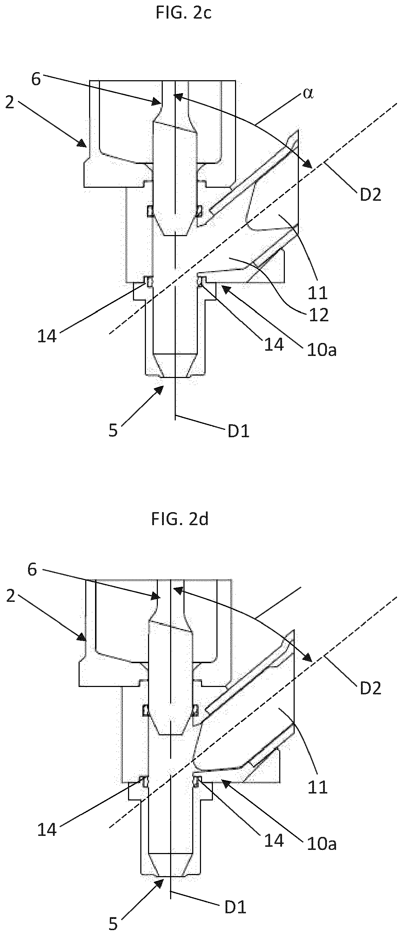

At this point, it is possible to dispense the dose from the dosing chamber 12 to the dispensing nozzle 5, as illustrated in figure 2c. In fact, the piston 11 slides inside the dosing cylinder 10 towards the valve body 2, i.e. downwards, and pushes on the dose of fluid present in the dosing chamber 12. As the reascent of the fluid up the passage 3 is prevented by the shutter 6, all the dose is dispensed by the dispensing nozzle 5.

At the end of dosing, the shutter 6 descends again, as illustrated in figure 2d, taking with it possible solid portions that might have got blocked along the passage 3.

The cycle can then start again.

During a step of sanitizing the dosing device 1, the sanitizing fluid is supplied through the inlet 4 to the passage 3, so that the components and the passages inside the valve body 2 are sanitized.

The sanitising fluid is loaded through a first conduit 29 located in an upper zone of the dosing device 1.

Drainage is made possible by the flower (or cross-shaped) structure of the shutter 6.

The sanitising fluid also reaches inside the dosing cylinder 10 owing to the rise of the piston 11 that comes to rest with the head at a section widening 10b of the dosing cylinder 10.

This section widening 10b enables sanitising fluid to rise from the dosing chamber 12 inside the dosing cylinder 10 to sanitize the inner components thereof. The sanitising fluid is then disposed of through a second drainage conduit 30.

The characteristics of the dosing device for dosing a fluid into a receptacle, according to the present invention, are clear from the description, as are the advantages.

In particular, the dosing cylinder is inclined relative to the valve body, so that the piston defines a dosing chamber that faces the inner passage of the valve body that is located above the dispensing nozzle. In this manner, further paths and/or conduits are eliminated, which complicate the structure.

Owing to the fact that the dosing cylinder leads directly into the valve body, the dosing device does not have dead volumes that are difficult to sterilize.

Further, the dosing device is more compact than known solutions.

The proposed device also enables a defined and repeatable dose (in terms of volume) to be dispensed because the piston faces directly the conduit that goes to the receptacle and all the volume of dosed product is thus drained into the container. On this other hand, this does not occur when there is an intermediate conduit between the cylinder and the conduit that goes to the container, as in prior-art solutions.

Further, the magnetic or electromagnetic coupling between the shutter and the first annular sleeve and/or the piston and the second annular sleeve avoids dynamic seals on the movable parts (bellows) that are difficult to sterilize.

## Claims

1. A dosing device (1) for dosing a fluid into a receptacle (50), comprising:
- a valve body (2) with an extension along a first prevalent direction (D1), said valve body (2) having a dispensing nozzle (5) for dispensing the fluid;
- a shutter (6) slidably inserted inside a passage (3) obtained in the valve body (2);
- a dosing cylinder (10) having an extension along a second prevalent direction (D2);
- a piston (11) slidably inserted into said dosing cylinder (10) so as to define a variable volume dosing chamber (12),
the second prevalent direction (D2) is inclined relative to the first prevalent direction (D1) so that the dosing cylinder (10) is inclined relative to the valve body (2), said dosing cylinder (10) leading with a first end (10a) into said valve body (2),
**characterised in that** said passage (3) is obtained between an inlet (4) for the fluid and the dispensing nozzle (5) for dispensing the fluid.

2. The dosing device (1) according to claim 1, wherein said first end (10a) of the dosing cylinder (10) leads into the valve body (2) above the filling nozzle (5).

3. The dosing device (1) according to any one of the preceding claims, wherein said dosing cylinder (10) is inclined relative to the valve body (2) by an angle comprised between 20° and 90°.

4. The dosing device (1) according to any one of the preceding claims, further comprising a first annular sleeve (7) fitted to the outside of the valve body (2), said shutter (6) and said first annular sleeve (7) being coupled magnetically or electromagnetically.

5. The dosing device (1) according to claim 4, wherein said shutter (6) comprises a first core made of ferromagnetic material, said first annular sleeve (7) comprising a plurality of first magnetic rings alternating with a plurality of first ferromagnetic rings.

6. The dosing device (1) according to claim 4 or 5, further comprising a first pneumatic cylinder or a first electric motor (20) that is operably active on said first annular sleeve (7) to make it slide on the valve body (2).

7. The dosing device (1) according to claim 4, wherein said first annular sleeve (7) is a fixed stator housing electric windings, and said shutter (6) houses permanent magnets.

8. The dosing device (1) according to any one of the preceding claims, further comprising a second annular sleeve (13) fitted to the outside of the dosing cylinder (10), said piston (11) and said second annular sleeve (13) being coupled magnetically or electromagnetically.

9. The dosing device (1) according to claim 8, further comprising a second pneumatic cylinder or a second electric motor (21) operably active on said second annular sleeve (13) to make it slide on the dosing cylinder (10).

10. The dosing device (1) according to claim 8, wherein said second annular sleeve (13) is a fixed stator housing electric windings, and said piston (11) houses permanent magnets.

11. A dosing machine (100) comprising:
- a tank for a fluid;
- a plurality of dosing devices (1) in accordance with any of the preceding claims.

## Patentansprüche

1. Dosiervorrichtung (1) zum Dosieren eines Fluids in einen Behälter (50), umfassend:
- einen Ventilkörper (2) mit einer Verlängerung entlang einer ersten vorherrschenden Richtung (D1), wobei der Ventilkörper (2) eine Ausgabedüse (5) zum Ausgeben des Fluids aufweist;
- einen Schließer (6), der verschiebbar in einen Durchgang (3) eingesetzt ist, der in dem Ventilkörper (2) erhalten ist;
- einen Dosierzylinder (10), aufweisend eine Verlängerung entlang einer zweiten vorherrschenden Richtung (D2);
- einen Kolben (11), der verschiebbar in den Dosierzylinder (10) eingesetzt ist, um eine Dosierkammer (12) mit variablem Volumen zu definieren,
wobei die zweite vorherrschende Richtung (D2) relativ zur ersten vorherrschenden Richtung (D1) geneigt ist, so dass der Dosierzylinder (10) relativ zum Ventilkörper (2) geneigt ist, wobei der Dosierzylinder (10) mit einem ersten Ende (10a) in den Ventilkörper (2) führt,
**dadurch gekennzeichnet, dass** der Durchgang (3) zwischen einem Einlass (4) für das Fluid und der Ausgabedüse (5) zum Ausgeben des Fluids erhalten ist.

2. Dosiervorrichtung (1) nach Anspruch 1, wobei das erste Ende (10a) des Dosierzylinders (10) oberhalb der Fülldüse (5) in den Ventilkörper (2) führt.

3. Dosiervorrichtung (1) nach einem der vorhergehenden Ansprüche, wobei der Dosierzylinder (10) relativ zum Ventilkörper (2) um einen Winkel zwischen 20° und 90° geneigt ist.

4. Dosiervorrichtung (1) nach einem der vorhergehenden Ansprüche, ferner umfassend eine erste ringförmige Hülse (7), die an der Außenseite des Ventilkörpers (2) angebracht ist, wobei der Schließer (6) und die erste ringförmige Hülse (7) magnetisch oder elektromagnetisch gekoppelt sind.

5. Dosiervorrichtung (1) nach Anspruch 4, wobei der Schließer (6) einen ersten Kern aus ferromagnetischem Material umfasst, wobei die erste ringförmige Hülse (7) eine Vielzahl von ersten magnetischen Ringen umfasst, die sich mit einer Vielzahl von ersten ferromagnetischen Ringen abwechseln.

6. Dosiervorrichtung (1) nach Anspruch 4 oder 5, ferner umfassend einen ersten Pneumatikzylinder oder einen ersten Elektromotor (20), der betriebswirksam auf der ersten ringförmigen Hülse (7) aktiv ist, um diese auf dem Ventilkörper (2) zu verschieben.

7. Dosiervorrichtung (1) nach Anspruch 4, wobei die erste ringförmige Hülse (7) ein fixierter Stator ist, der elektrische Wicklungen beherbergt, und der Schließer (6) Permanentmagnete beherbergt.

8. Dosiervorrichtung (1) nach einem der vorhergehenden Ansprüche, ferner umfassend eine zweite ringförmige Hülse (13), die an der Außenseite des Dosierzylinders (10) angebracht ist, wobei der Kolben (11) und die zweite ringförmige Hülse (13) magnetisch oder elektromagnetisch gekoppelt sind.

9. Dosiervorrichtung (1) nach Anspruch 8, ferner umfassend einen zweiten Pneumatikzylinder oder einen zweiten Elektromotor (21), der betriebswirksam auf der zweiten ringförmigen Hülse (13) aktiv ist, um diese auf dem Dosierzylinder (10) zu verschieben.

10. Dosiervorrichtung (1) nach Anspruch 8, wobei die zweite ringförmige Hülse (13) ein fixierter Stator ist, der elektrische Wicklungen beherbergt, und der Kolben (11) Permanentmagnete beherbergt.

11. Dosiermaschine (100), umfassend:
- einen Tank für ein Fluid;
- eine Vielzahl von Dosiervorrichtungen (1) nach einem der vorhergehenden Ansprüche.

## Revendications

1. Dispositif de dosage (1) destiné au dosage d'un fluide dans un récipient (50), comprenant :
- un corps de vanne (2) doté d'une extension le long d'une première direction prédominante (D1), ledit corps de vanne (2) comportant une buse de distribution (5) pour distribuer le fluide ;
- un obturateur (6) inséré de manière coulissante à l'intérieur d'un passage (3) obtenu dans le corps de vanne (2) ;
- un cylindre de dosage (10) ayant une extension le long d'une deuxième direction prédominante (D2) ;
- un piston (11) inséré de manière coulissante dans ledit cylindre de dosage (10) afin de définir une chambre de dosage (12) à volume variable,
la deuxième direction prédominante (D2) étant inclinée par rapport à la première direction prédominante (D1) de manière à ce que le cylindre de dosage (10) soit incliné par rapport au corps de vanne (2), ledit cylindre de dosage (10) débouchant sur une première extrémité (10a) dans ledit corps de vanne (2),
**caractérisé en ce que** ledit passage (3) est obtenu entre une entrée (4) pour le fluide et la buse de distribution (5) pour distribuer le fluide.

2. Dispositif de dosage (1) selon la revendication 1, dans lequel la première extrémité (10a) du cylindre de dosage (10) débouche dans le corps de vanne (2) au-dessus de la buse de remplissage (5).

3. Dispositif de dosage (1) selon l'une quelconque des revendications précédentes, dans lequel ledit cylindre de dosage (10) est incliné par rapport au corps de vanne (2) d'un angle compris entre 20° et 90°.

4. Dispositif de dosage (1) selon l'une quelconque des revendications précédentes, comprenant de plus un premier manchon annulaire (7) fixé à l'extérieur du corps de vanne (2), ledit obturateur (6) et ledit premier manchon annulaire (7) étant couplés magnétiquement ou électromagnétiquement.

5. Dispositif de dosage (1) selon la revendication 4, dans lequel ledit obturateur (6) comprend un premier noyau en matériau ferromagnétique, ledit premier manchon annulaire (7) comprenant une pluralité de premiers anneaux magnétiques s'alternant avec une pluralité de premiers anneaux ferromagnétiques.

6. Dispositif de dosage (1) selon la revendication 4 ou 5, comprenant de plus un premier cylindre pneumatique ou un premier moteur électrique (20) étant fonctionnellement actif sur ledit premier manchon annulaire (7) pour le faire coulisser sur le corps de vanne (2).

7. Dispositif de dosage (1) selon la revendication 4, dans lequel ledit premier manchon annulaire (7) est un stator fixe logeant des enroulements électriques, et ledit obturateur (6) loge des aimants permanents.

8. Dispositif de dosage (1) selon l'une quelconque des revendications précédentes, comprenant de plus un deuxième manchon annulaire (13) fixé à l'extérieur du cylindre de dosage (10), ledit piston (11) et ledit deuxième manchon annulaire (13) étant couplés magnétiquement ou électromagnétiquement.

9. Dispositif de dosage (1) selon la revendication 8, comprenant de plus un deuxième cylindre pneumatique ou un deuxième moteur électrique (21) fonctionnellement actif sur ledit deuxième manchon annulaire (13) pour le faire coulisser sur le cylindre de dosage (10).

10. Dispositif de dosage (1) selon la revendication 8, dans lequel ledit deuxième manchon annulaire (13) est un stator fixe logeant des enroulements électriques, et ledit piston (11) loge des aimants permanents.

11. Machine de dosage (100), comprenant :
- un réservoir pour un fluide ;
- une pluralité de dispositifs de dosage (1) selon l'une quelconque des revendications précédentes.
